# EUROPEAN PATENT SPECIFICATION

(11) **EP 1 107 104 B1**
(45) Date of publication and mention of the grant of the patent: **29.05.2013**
(21) Application number: 00125871.4
(22) Date of filing: 24.11.2000
(51) Int. Cl.: G06F 3/12, G06K 15/00

(54) **Printing system with standby and/or sleep mode**
Druckersystem mit Bereitschaft- und/oder Schlafmodus
Système d'impression avec mode d'attente et/ou de sommeil

(30) Priority: 30.11.1999 JP 33930699
(43) Date of publication of application: 13.06.2001
(73) Proprietor: Ricoh Company, Ltd., Tokyo 143-8555 (JP)
(72) Inventor: Yamada, Toshiyuki, Hitachi Info. Tech. Co. Ltd., Ashigarakami-gun, Kanagawa-ken 259-0157 (JP); Hirayama, Natsuhiko, Hitachi Info. Tech. Co. Ltd., Ashigarakami-gun, Kanagawa-ken 259-0157 (JP); Okada, Tadashi, Hitachi, Ltd., Chiyoda-ku, Tokyo 100-8220 (JP); Onoda, Takashi, Hitachi, Ltd., Chiyoda-ku, Tokyo 100-8220 (JP); Suzuki, Nobuo, Hitachi, Ltd., Chiyoda-ku, Tokyo 100-8220 (JP)
(74) Representative: Strehl Schübel-Hopf & Partner

(56) References cited:
- EP-A- 0 480 638
- JP-A- 11 070 716
- JP-A- 11 175 266
- US-A- 5 930 551

## Description

### BACKGROUND OF THE INVENTION

The present invention relates to an improvement of a printing data supply equipment for transmitting printing data to a printer apparatus provided with a sleep mode and a standby mode which improvement is served to shorten a first printing time or improve the ease-of-use of the equipment itself.

In recent days, many printers are arranged to support a sleep mode at which supply of an electric power to a unit for consuming a large power such as a fixing heater is stopped for reducing the power consumption if no operation of outputting the printing data is ordered after a certain length of time or a set length of time is passed. In general, these printers operate to perform a wake-up process for releasing the printer from the sleep mode and then supplying an electric power to the fixing heater when the printing data is received and then output the printed matter after the wake-up process is terminated. The first print time between when an indication of printing is given and when the printed matter is outputted needs the wake-up time of the printer apparatus as well as the generation time of the printing data in the upper equipment and the printing time in the printer apparatus. Hence, in case the printer apparatus stays at the sleep mode, the first print time is made longer, so that the ease-of-use does not become so excellent.

The method of solving the problem of a long first print time at the sleep mode and shortening the first print time is disclosed in JP-A-8-278859 or JP-A-10-171613.

The former related art is arranged as follows. The server unit for receiving the printing data from a workstation is served to issue a command for releasing the printer apparatus from the sleep mode at the start of receiving the printing data from the workstation or at the log-in from the workstation or the establishment of a logical session and thereby release the printer apparatus from the sleep mode before transmitting the printing data to the printer apparatus for shortening the first print time.

The latter related art is arranged as follows. The upper equipment is served to detect if a printer driver for generating the printing data is located in a given memory and, if the printer driver is located in a given memory, release the printer apparatus from the sleep mode before transmitting the printing data to the printer apparatus by issuing a command for releasing the sleep mode to the printer apparatus for the purpose of reducing the first print time.

Further, as disclosed in JP-A-11-99731, a laser printer engine provides a standby mode as well as the sleep mode, for power saving or improving the life. The return from the standby mode is executed by a pre-start indication. The return time needs a time from the start of the rotation of a photosensitive drum to the constant rotation or a time between the start of fine adjustment of a temperature of a fixer and the end thereof. The JP-A-11-99731 discloses the technology of adjusting the return timing from the standby mode according to the quantity of the printing data.

Further, not a few printers support both the sleep mode and the standby mode. Some of these printers operate to shift the mode in a stepwise manner and then go to the standby mode by the command for releasing the sleep mode.

US 5930551 discloses a printing system in line with the preamble of appended claim 1. A similar printing system is described in US 6493100.

### SUMMARY OF THE INVENTION

Those related arts do not consider a printing spool capability that may be often used for plural upper equipments to efficiently share a printer apparatus or need another printing server. Hence, those related arts are not proper to a small-scaled network system connected with a printer apparatus provided with a sleep mode.

Moreover, those related arts do not consider a long printing data generating time when data such as text, graphics and pictures is rasterized and the corresponding bit-map data is generated or the case that a long time is needed for generating the printing data because of a large printing data like large area printing. That is, before generating the printing data, the sleep mode is released. However, in generating the printing data, the printer apparatus is shifted to the sleep mode again and the wake-up process is performed again in receipt of the printing data. It means that the first release of the sleep mode is made useless and the first print time is not shortened.

In the case of setting a longer setting time for shifting the printer apparatus to the sleep mode for the purpose of preventing the printer apparatus from shifting to the sleep mode in generating the printing data, some printing conditions disallow the printer apparatus to be shifted to the sleep mode.

Moreover, the related arts also have a shortcoming that the printer apparatus that supports the standby mode may start itself if the return time from the standby mode is shorter than the receiving time of the printing data.

The present invention is made to solve the foregoing shortcomings. It is an object of the present invention to provide the most approximate control method of the printing data to shortening the first print time in the printing data supply equipment provided with a printing spool capability for temporarily storing the printing data so that one printer apparatus can be efficiently shared in response to plural printing requests.

The foregoing object is met by the equipment of claim 1 and the method of claim 5. The subclaims relate to preferred modifications. According to an embodiment of the invention, the printing data supply equipment is arranged to issue a start-up printing job for releasing the printer apparatus from the sleep mode before the printing job generates the printing data and then transmits the printing data to the printer apparatus. The start-up printing job is executed to generate the start-up data and then transmit the data to the printer apparatus. Hence, the start-up printing data and the printing data are inputted to the spool in this describing sequence and then stored therein. Then, the spool is served to sequentially transmit the printing data to the printer apparatus. In receipt of the start-up printing data, the printer apparatus returns from the sleep mode if it stays at the sleep mode. Then, the receipt of the printing data and the printing operation are executed.

According to another embodiment of the invention, the printing data supply equipment is arranged to add to the printing data a first time set value for setting a time when the printer apparatus shifts to the sleep mode and then indicate the first time set value to the printer apparatus. Further, the printing data supply equipment is arranged to add to the start-up printing data a second time set value when the printer apparatus shifts to the sleep mode again and indicates it to the printer apparatus. In the case of the printing condition in which a long processing time is needed for generating the printing data, a longer value than the generation time of the printing data is set to the second time set value, while a shorter time for sufficiently obtaining a reducing effect of the power consumption is set to the first time set value. The printer apparatus shifts to the sleep mode after the time specified by the first and the second time set values is passed.

If no printing data can be received after the start-up printing data is received for returning the printer apparatus from the sleep mode by means of some obstacles or a human interruption of printing, the printer apparatus shifts to the sleep mode after the second time specified by the start-up printing data is passed. Hence, the power consumption may be reduced as planned.

According to another embodiment of the invention, the printing data supply equipment provided with the standby mode is arranged to obtain the amount of the printing data according to the printing conditions including a resolution of the printing data, a printing mode indicating if the print is color or monochrome, and a paper size on which the printing data is outputted and then derive the transmitting time of the printing data from the printing data supply equipment to the printer apparatus. A printing job in which the amount of the printing data is small and the transmitting time of the printing data is shorter than the return time of the printer apparatus from the standby mode is executed to add a command for indicating the pre-start of the printer apparatus to another start-up printing data rather than the printing data. Further, another printing job in which the transmitting time of the printing data is longer than the return time of the printer apparatus from the standby mode is executed to add to the printing data a command for indicating the pre-start of the printer apparatus. When the printer apparatus receives a command for indicating the pre-start including the start-up printing data or the printing data, the printer apparatus operates to return itself from the standby mode if it stays at the standby mode. Then, the receipt of the printing data and the printing operation are executed in succession.

### BRIEF DESCRIPTION OF THE DRAWINGS

Fig. 1 is a time chart showing the case of returning from a sleep mode and then printing the data according to the present invention;
Fig. 2 is a time chart showing the case of returning from a sleep mode and then printing the data according to the related art;
Fig. 3 is a block diagram showing a printing system to which the present invention applies;
Fig. 4 is a time chart showing the case in which plural upper equipments print the data without using a spooler according to the related art;
Fig. 5 is a time chart showing the case in which plural upper equipments print the data by using the spooler according to the present invention;
Fig. 6 is a time chart showing the case that the sequence of requesting the print is different from the sequence of printing if plural upper equipments print the data by using the spooler according to the present invention;
Fig. 7 is a flowchart for describing the printing process of the present invention;
Fig. 8 is a flowchart showing the case in which an upper equipment specifies a shifting time to the sleep mode according to the present invention;
Fig. 9 is a flowchart showing the case of issuing a pre-start command according to the present invention;
Fig. 10 is a block diagram showing an upper equipment to which the present invention applies; and
Fig. 11 is a block diagram showing a printer to which the present invention applies.

### DETAILED DESCRIPTION OF THE EMBODIMENTS

The present invention will be described in detail with reference to the appended drawings. In the following description, the printing data supply equipment is described as an upper equipment.

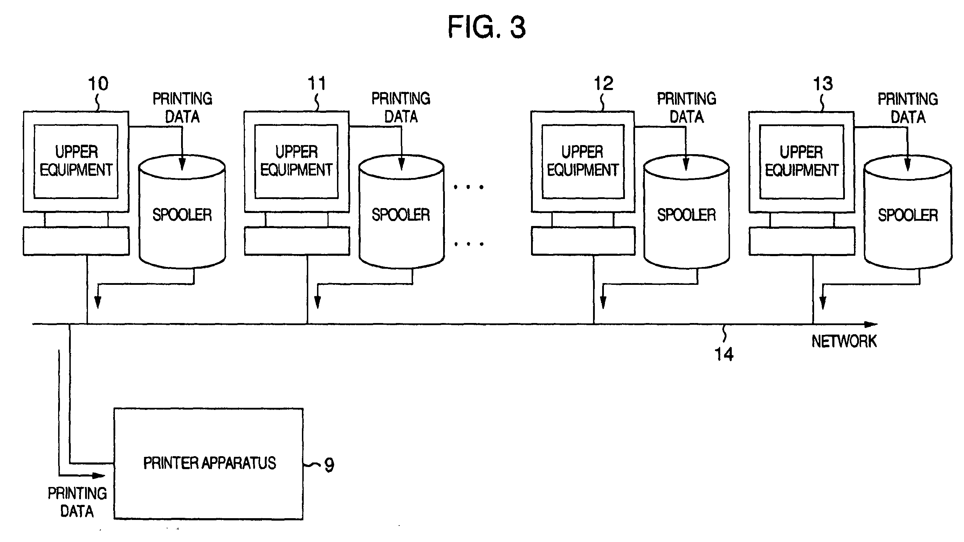

As shown in Fig. 3, the present embodiment is applied to the system having a printer apparatus 9 and upper equipments 10 to 13 for temporarily spooling the printing data on a job unit and transmitting the printing data after the printing data is generated, the printer apparatus 9 and the upper equipments 10 to 13 being connected through a network 14. If no receipt of the printing data is given for a certain length of time, the printer apparatus 9 shifts to a sleep mode. Then, if the printing data is received, the printer apparatus 9 performs a warm-up operation for a certain length of time and then prints the printing data.

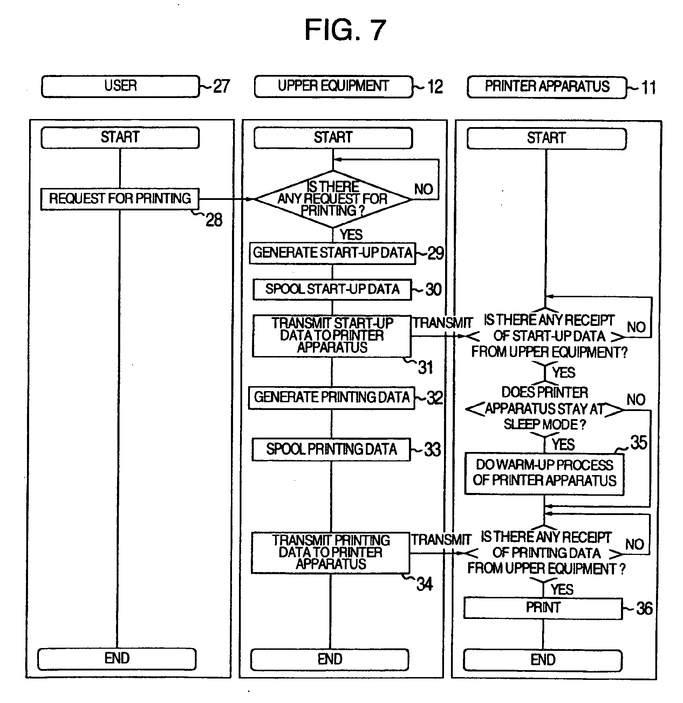

Fig. 7 is a flowchart showing relation among a user 29 of an upper equipment for requesting printing, the upper equipment 12 and the printer apparatus 11 according to the present invention. One embodiment of the present invention will be described along the flowcharts of Fig. 3 to 7. The printer apparatus 9 provides a start-up command for releasing the sleep mode and starting the warm-up process without doing the printing operation. If a printing request 28 is given from the user 27, before executing the printing job that is the printing request given from the user, the upper equipment 10 executes the start-up job for returning the printer from the sleep mode. The start-up job is executed as follows. At first, in the generation of the start-up data 29, the operation is executed to generate the start-up data in which the printer starting command is stored for releasing the printer apparatus 9 from the sleep mode. Then, a spool 30 for the start-up data operates to spool the start-up data as the printing data of the start-up printing job. Before the printing data, this start-up data is spooled as another printing data rather than the printing data generated in the generation 32 of the printing data. The start-up data spooled by the upper equipment 10 is transmitted to the printer apparatus 9 before the upper equipment 10 generates the printing data in the transmission 31 of the start-up data to the printer apparatus. The printer apparatus 9 at the sleep mode that receives the start-up data operates to determine if the printer is at the sleep mode. If it is at the sleep mode, the printer apparatus is released from the sleep mode and then executes the warm-up process 35. After the termination of the warm-up process 35 of the printer apparatus, the printer apparatus waits for the printing data. The upper equipment 10 executes the printing job after transmission of the start-up data. The printing job is executed to do the generation of the printing data (step 32) and then spool the printing data (step 33). Upon completion of spooling the data, in the transmission 34 of the printing data to the printer apparatus, the printing data is transmitted from the spool to the printer apparatus 9. The printer apparatus 9 prints the printing data received at the printing process 36.

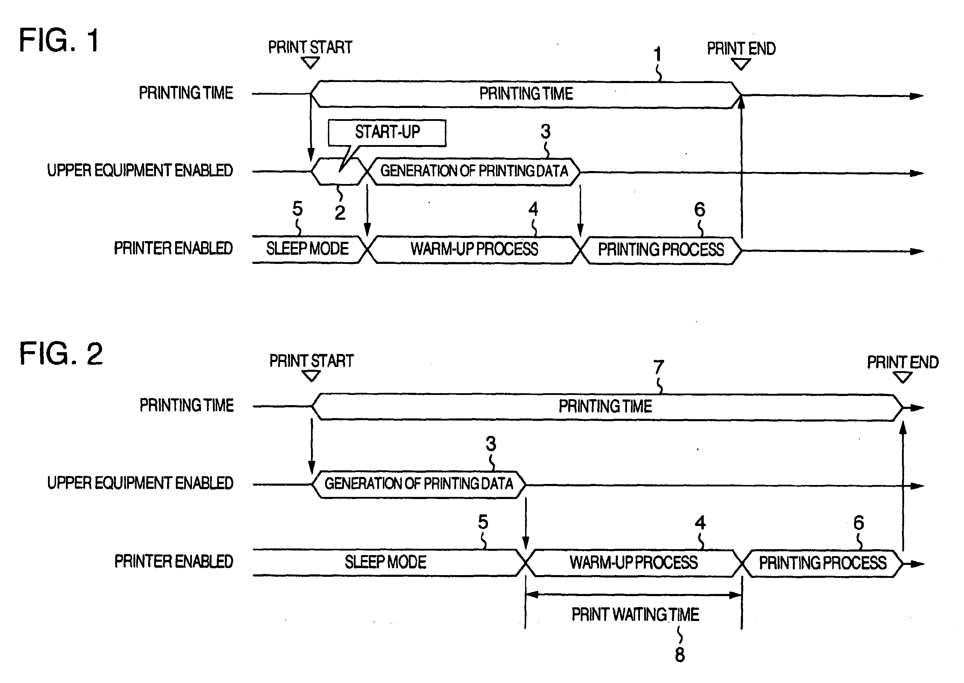

Fig. 1 shows a time chart indicating the operation of the upper equipment and the printer apparatus according to the present invention. As described above, the upper equipment transmits the start-up data to the printer apparatus at the start of printing. The printer apparatus having received this start-up data is served to release the sleep mode and then perform the warm-up process. This enables the process 3 of generating the printing data in the upper equipment and the warm-up process 4 in the printer apparatus to be done in parallel. As indicated in the time chart of Fig. 2, the conventional printing system indicates the release of the sleep mode to the printer apparatus after the process 3 of generating the printing data is completed. Then, the printer apparatus performs the warm-up process 4 and then the printing process 6 after the warm-up process is completed. It means that the printing waiting time 8 corresponding to the warm-up process 4 takes place. When the printer apparatus stays at the sleep mode, the printing time of the first page between the start of printing and the completion of printing correspond to the printing time 1 in this invention and the printing time 7 in the related art. The printing time 1 in Fig. 1 is generally a reduced time of the printing waiting time 8 shown in Fig. 2. The present invention therefore enables to reduce the first printing time when the printer apparatus stays at the sleep mode.

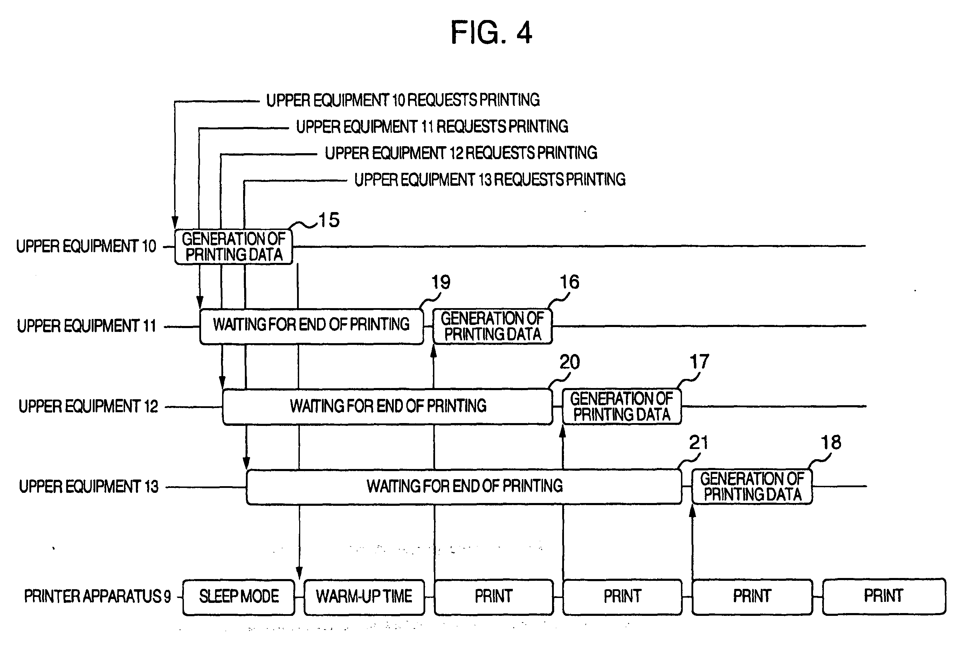

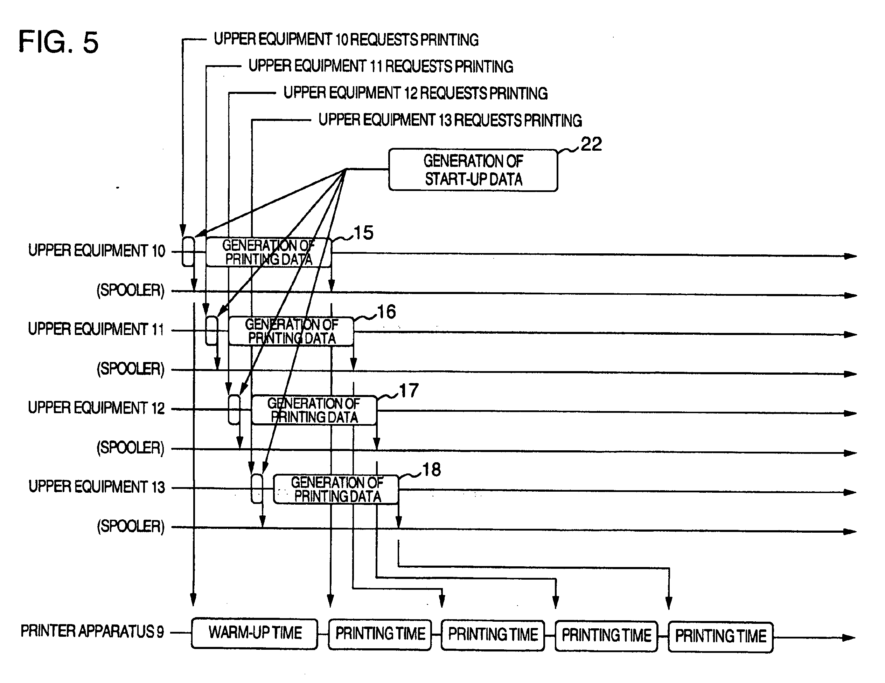

Then, with reference to Figs. 4 and 5, the description will be oriented to the case wherein plural upper equipments share the printer apparatus. Fig. 5 shows a printing time chart appearing when the printing system of the invention is employed in the system having plural upper equipments 10 to 13 and one printer apparatus 9 connected thereto. Fig. 4 is a printing time chart appearing in the case that the upper equipments 10 to 13 do not spool the printing data in the conventional printing system provided with the printing system arrangement that is similar to that of Fig. 5. In the case of the conventional system shown in Fig. 4 that does not use the spooler, as in the time chart, until the printing of the upper equipment having started the printing first is terminated, the upper equipment having requested the printing disables to transmit the data to the printer apparatus 9. Hence, the waiting times 19 to 21 take place. Further, in the case of continuously printing plural pages, the processing time for generating the printing data is made longer and the printing speed is made lower. According to the invention, as shown in Fig. 5, since the printing data is spooled, even while the printer apparatus 9 is printing the printing data received from the upper equipment 10, the other upper equipments 11 to 13 may generate the printing data. Hence, since the upper equipment does not need to wait for the printing, even in the environment where plural upper equipments 10 to 13 are connected to one printer apparatus 9, the operation may be effectively executed.

In the case that the printer apparatus 9 is at the sleep mode in Fig. 4, after the printing data generation 15 of the upper equipment 10 is terminated, the printer apparatus 9 performs the warm-up process after the receipt of the printing data. After the termination of the warm-up process, the printing data received from the upper equipment 10 is printed. In the present invention shown in Fig. 5, the upper equipment 10 executes the start-up job before execution of the printing job (printing data generation 15) by means of the request for printing, generate the start-up printing data 22, and transmit the start-up printing data to the printer apparatus 9. The printer apparatus 9 performs the warm-up process by receiving this start-up printing data. In response to the request for printing by the upper equipment 10, the printer apparatus 9 starts the warm-up process. Hence, it enables to start the warm-up process faster than the conventional printer apparatus.

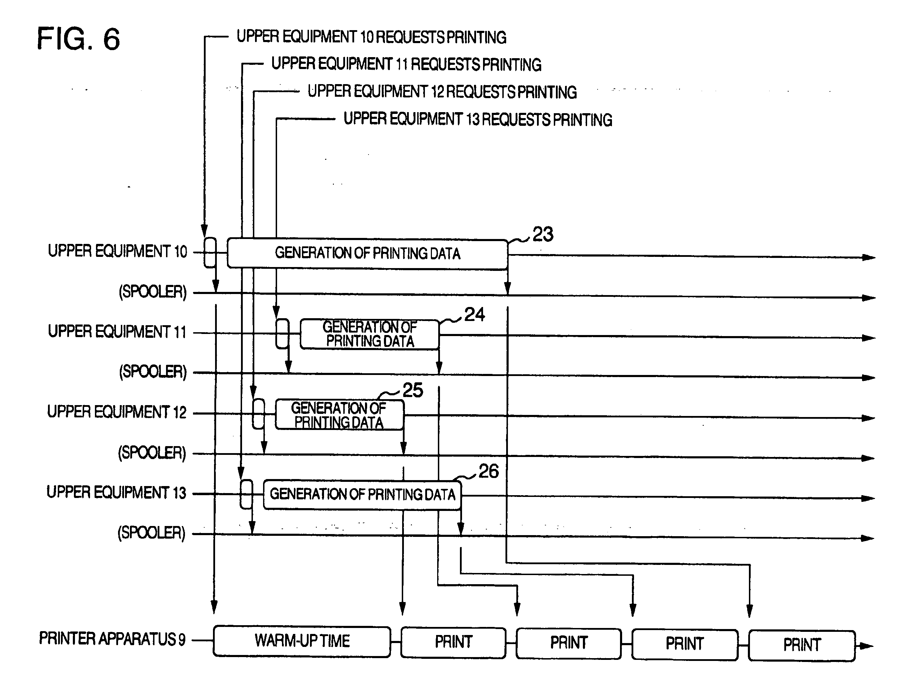

In this invention, the job for the printer starting data and the job for the printing data are executed independently. For example, hence, after the start-up data is transmitted from the upper equipment 10 to the printer apparatus 9, before completion of generation of the printing data, the other upper equipments 11 to 13 may transmit the data for starting the printer and the printing data to the printer apparatus 9. In this case, after the printing data transmitted from the other upper equipments 11 to 13 is printed, the upper equipment 10 operates to transmit the printing data to the printer apparatus 9 in which the data is printed. Fig. 6 shows a time chart appearing in the case that the printing data of the other upper equipments 10 to 13 is transmitted to the printer apparatus 9 having started the warm-up process by means of the start-up data of the upper equipment 10 that has been requested to be printed at first before the generation of the printing data of the upper equipment 10 is completed.

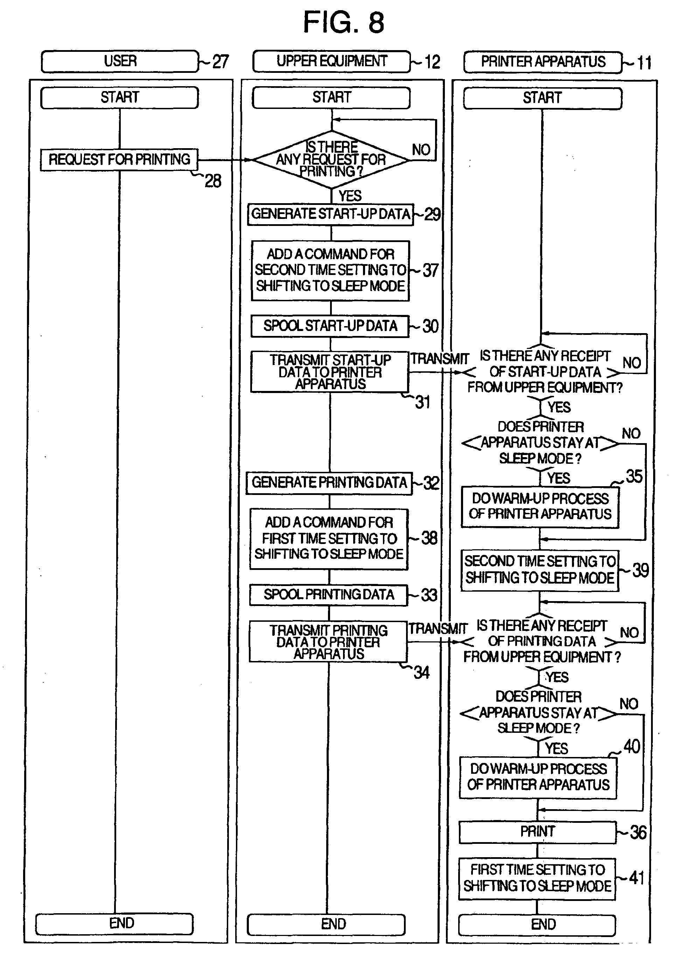

In turn, the description will be oriented to the printing system in which the upper equipment provides means for specifying a time taken in shifting the printer apparatus to the sleep mode by means of the data transmitted from the upper equipment to the printer apparatus and a function of causing the printer apparatus to shift to the sleep mode after the passage of the time specified by the printing data or the start-up data received in the printer apparatus with reference to Fig. 8.

The flowchart indicated in Fig. 8 additionally includes a process of setting a time taken when the printer shifts to the sleep mode as compared with the flowchart of Fig. 7. The upper equipment additionally includes a second time setting command for shifting to the sleep mode (step 37) and a first time setting command for setting to the sleep mode (step 38). The printer apparatus 11 additionally includes a second time setting process (step 39) for shifting to the sleep mode specified by the upper equipment, a first time setting process (step 41) for shifting to the sleep mode, and a warm-up process (40) of the printer apparatus 11 itself if the printer apparatus stays at the sleep mode. The upper equipment 12 executes the start-up job before execution of the printing job. The start-up job is executed to add the second time setting command to the start-up data in the addition of the second time setting command for shifting to the sleep mode, spool the start-up data with the command added thereto as the start-up data, and transmit the start-up data to the printer apparatus. For example, the second time taken when the printer apparatus 11 shifts to the sleep mode is specified as 30 minutes. When the start-up data is received, the printer apparatus 11 operates to determine if the printer apparatus 11 stays at the sleep mode. If it stays at the sleep mode, the printer apparatus 11 operates to release the sleep mode and start the warm-up process (step 35). Then, the printer apparatus 11 starts to measure the second time as the time specified by the second time setting command for shifting to the sleep mode, added to the start-up data, is set as the time taken when the printer apparatus 11 shifts to the sleep mode. For example, if no printing data is received within 30 minutes that is the second time, the printer apparatus 11 shifts to the sleep mode again. The upper equipment 12 operates to add the first time setting command to the printing data after the printing data is generated (step 32) in the addition (step 38) of the first time setting command for causing the printer apparatus 11 to shift to the sleep mode, spool the resulting data as the printing data (step 33), and then transmit the printing data to the printer apparatus 11 (step 34). For example, the first time taken until the printer apparatus 11 shifts to the sleep mode is specified as five minutes. When the printing data is received, the printer apparatus 11 determines if the printer apparatus 11 stays at the sleep mode and if it is at the sleep mode, releases the sleep mode and start the warm-up process (step 40). When the warm-up process 40 makes the printer apparatus 11 operative, the printing process 36 is executed to output the received printing data. Then, the operation is executed to measure the first time as setting the time specified by the first time setting command for causing the printer apparatus 11 to shift to the sleep mode as the time taken in causing the printer apparatus 11 to shift to the sleep mode. For example, if no next printing data is received within five minutes that is the first time, the printer apparatus 11 shifts to the sleep mode again. This makes it possible to set a longer second time for measuring the time taken between the start-up data and the printing data to be reliably received if no obstacles or human printing interruption are given. Hence, the first time for measuring the time between the printing jobs that are not reliably received may be set as so short a time that the effect of reducing the power consumption can be obtained.

Next, the description will be oriented to the embodiment in which the operation is executed to derive a difference of the printing data according to the printing conditions, add a pre-start command to the printing data or the start-up printing data, and then start the printer. Herein, the printing conditions include a resolution of the printing data, a printing mode indicating if the printing is color or monochrome, and a paper size on which the printing data is outputted.

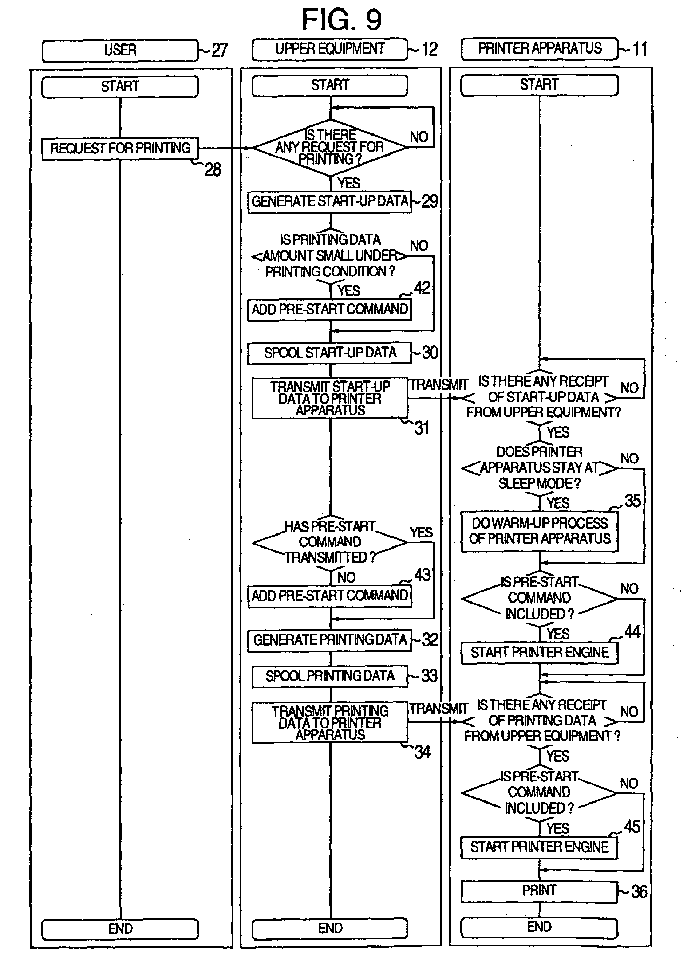

The printing flowchart indicated in Fig. 9 adds a process of transmitting a pre-start command to the printer that stays at a standby mode to the process at the upper equipment 12. The start-up job of the upper equipment 12 is executed to derive the printing data amount according to the printing conditions, estimate the transmitting time of the printing data, and compare the transmitting time with the time taken when the printer returns from the standby mode. If the printing data amount is small and the transmitting time is short, the pre-start command is added to the start-up printing data (step 42). Then, the printer apparatus 12 operates to determine if the printing job is executed to transmit the pre-start command. If not, the printer apparatus 12 adds the pre-start command to the printing data (step 43). The transmission of the printing data is likewise to that shown in Fig. 7. As described above, if the printing data is small and the transmitting time of the printing data is shorter than the return time of the printer from the standby mode, the upper equipment 12 operates to add the pre-start command to the start-up printing data. If the former is longer than the latter, the upper equipment 12 operates to add the pre-start command to the printing data. For example, under the printing condition that the resolution is low, the printing is monochrome, or the paper size is A5, it is determined that the printing data amount is small. When the start-up data is received, the printer apparatus 11 determines if the printer apparatus 11 stays at the sleep mode. If so, the printer apparatus 11 releases itself from the sleep mode and then starts the warm-up process (step 35). If the pre-start command is detected in the start-up data, the printer engine start (step 44) is executed. Further, when the printing data is received, if the printer apparatus 11 detects the pre-start command in the printing data, the printer apparatus 11 executes the printer engine start (step 45).Then, the printer apparatus 11 receives the succeeding printing data and then executes the printing process 36. At the printing job where the printing data is small and the time required for receiving the printing data is shorter than the rise time of the printer engine, in parallel to the generation of the printing data and the transmission of the printing data in the upper equipment, the printer apparatus pre-starts the printer engine. This thus makes it possible to reduce the first print time as compared with the pre-start caused by the printing data.

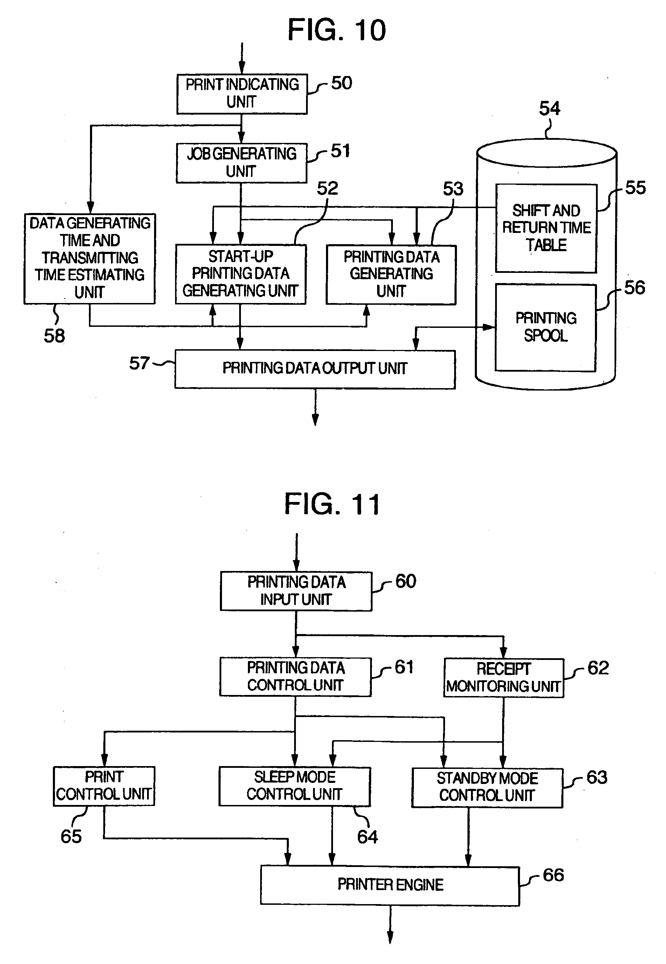

Next, the arrangement of the upper equipment 12 to which the present invention applies is illustrated in Fig. 10, while the arrangement of the printer is illustrated in Fig. 11. A print indicating unit 50 is served to receive a printing indication given by a user. A job generating unit 51 is served to indicate generation of a printing job or a start-up job. A start-up printing data generating unit 52 is served to start the start-up job for executing a printing command for returning the printer at the sleep mode or the standby mode or the printing data and then outputting the data to the printing data output unit 57. Further, the start-up printing data generating unit 52 operates to refer to the shift and return time table 55 stored in a storage unit 54. When generating the start-up data, the shift time to the sleep mode is indicated to the printer. A printing data generating unit 53 causes the printing job to be executed for generating the printing data and then outputting the data to the printing data output unit 57. The printing data generating unit 53 operates to refer to the shift and return time table 55 stored in the storage unit 54 and then indicate the shift time to the sleep mode in generating the printing data. At this time, a data generating time and transmitting time estimating unit 58 operates to set the shifting time to the sleep mode on the basis of the printing conditions indicated by the user and indicate it to the start-up printing data generating unit 52 or the printing data generating unit 53. The printing data output unit 57 is served to transmit the inputted data to the printer 9 as it is temporarily storing the inputted data in a printing spool 56.

Then, Fig. 11 shows the details of the arrangement of the printer 9. A printing data input unit 60 is served to receive the printing data from the upper equipments 10 to 13. The received printing data is determined to be the actual printing data or the print control command through the effect of the printing data control unit 61. The printing data is rasterized as the image data in a printing control unit 65 and then transmitted to the printer engine 66 and then is printed. The printer engine 66 operates to control the shift and return to the sleep mode on the printing control command through the use of the sleep mode control unit 64. Then, a standby mode control unit 63 controls the shift to and return from the standby mode.

According to the invention, the printer apparatus enables to efficiently return from the sleep mode. Hence, the spool of the printing data supply equipment enables to share the printer apparatus without having to use the monitor for monitoring the sleep mode or the print server. It also shortens the first print time as well as improves the ease-of-use and obtains the sufficient effect of reducing the power consumption of the printer apparatus.

## Claims

1. A printing system including a printer (9) having a sleep mode, and a first printing data supply equipment (10) connected to said printer, said first printing data supply equipment comprising:
means (51) for generating a start-up job for releasing said printer from the sleep mode before executing a printing job;
means (52) for generating a start-up printing data set for releasing said printer from the sleep mode based on said start-up job;
means (53) for generating a printing data set based on said printing job; and
spooling means (54) for storing said start-up printing data set and said printing data set on time series,
**characterised in that**
the spooling means (54) is adapted to store said printing data set after its generation has been completed, even if said printing data set includes plural pages,
said printing system further includes a second printing data supply equipment (11 to 13), and
said first printing data supply equipment is adapted to transmit said start-up printing data set and said printing data set independently to said printer (9), so that another printing data set of another printing job from said second printing data supply equipment (11 to 13) may be transmitted to said printer after said start-up printing data set and before completion of generation of said printing data set.

2. The system of claim 1, wherein
said printing data generating means (53) is adapted to add first time setting data to the printing data set for re-shifting said printer to said sleep mode after the printing of the printing data set has been completed, and
said start-up printing data generating means (52) is adapted to add second time setting data to the start-up printing data set for re-shifting said printer to said sleep mode, if said start-up printing data set is not followed by printing data.

3. The system of claim 2, further comprising means (58) for estimating a generating time of said printing data set,
wherein said start-up printing data generating means (52) is adapted to set said second time setting data to a longer value than said estimated generating time.

4. The system of claim 1, wherein said printer (9) has both, said sleep mode and a standby mode, the first printing data supply equipment (10) further comprising means (58) for estimating a transmitting time of said printing data set, wherein
said start-up printing data generating means (52) or said printing data generating means (53) is adapted to add a pre-start command to said start-up printing data set or said printing data set for returning said printer from said standby mode,
said printing data generating means (53) is adapted to add said pre-start command to said printing data set, if said transmitting time is longer than a return time from said standby mode and
said start-up printing data generating means (52) is adapted to add said pre-start command to said start-up printing data set, if said transmitting time is shorter than the return time from said standby mode.

5. A print control method of a printing system including a printer (9) having a sleep mode, and first and second printing data supply equipments (10 to 13) being connected to said printer (9), the method comprising the steps of:
generating (29) a start-up printing data set for releasing said printer from the sleep mode based on a start-up job before execution of a printing job from said first printing data supply equipment (10);
spooling (30) said start-up printing data set;
generating (32) a printing data set based on said printing job;
spooling (33) said printing data set after its generation has been completed, even if said printing data set includes plural pages; and
transmitting said start-up printing data set and said printing data set independently to said printer (9), so that another printing data set of another printing job from said second printing data supply equipment (11 to 13) may be transmitted to said printer after said start-up printing data set and before completion of generation of said printing data set.

6. The method of claim 5, further comprising the steps of:
adding first time setting data to the printing data set for re-shifting said printer to said sleep mode after the printing of the printing data set has been completed, and
adding second time setting data to the start-up printing data set for re-shifting said printer to said sleep mode, if said start-up printing data set is not followed by printing data.

7. The method of claim 6, further comprising the step of estimating a generating time of said printing data set before execution of said printing job,
wherein said start-up job sets the second time setting data to a longer value than the estimated generating time.

8. The method of claim 5, using a printer (9) having both, the sleep mode and a standby mode, further comprising the steps of:
estimating a transmitting time of said printing data set before execution of said printing job,
adding a pre-start command to said start-up printing data set, if said transmitting time is shorter than the return time from the standby mode of said printer, and
adding a pre-start command to said printing data set, if said transmitting time is longer than the return time from the standby mode of said printer.

9. The system of any of claims 1 to 4, wherein
said first and second printing data supply equipments (10 to 13) are adapted to transmit the start-up printing data set and the printing data set for output to said printer (9), and
said printer is adapted to release itself from the sleep mode by said start-up printing data set received at first from any one of said first and second printing data supply equipments.

## Patentansprüche

1. Drucksystem, das einen Drucker (9) mit einem Schlafmodus und eine erste an den Drucker angeschlossene Druckdaten-Zuführeinrichtung (10) aufweist, wobei die erste Druckdaten-Zuführeinrichtung aufweist:
eine Einrichtung (51) zum Erzeugen eines Startjobs zur Freigabe des Druckers aus dem Schlafmodus bevor ein Druckjob ausgeführt wird,
eine Einrichtung (52) zum Erzeugen eines Startdruckdatensets zur Freigabe des Druckers aus dem Schlafmodus basierend auf dem Startjob,
eine Einrichtung (53) zum Erzeugen eines Druckdatensets basierend auf dem Druckjob und
eine Spoolingeinrichtung (54) zum Speichern des Startdruckdatensets und des Druckdatensets in zeitlicher Reihenfolge,
**dadurch gekennzeichnet, dass**
die Spoolingeinrichtung (54) dazu ausgelegt ist, das Druckdatenset zu speichern, nachdem dessen Erzeugung abgeschlossen wurde, auch wenn das Druckdatenset mehrere Seiten enthält,
das Drucksystem ferner einer zweite Druckdaten-Zuführeinrichtung (11-13) aufweist, und
die erste Druckdaten-Zuführeinrichtung dazu ausgelegt ist, das Startdruckdatenset und das Druckdatenset unabhängig voneinander zu dem Drucker (9) zu übertragen, so dass ein anderes Druckdatenset eines anderen Druckjobs von der zweiten Druckdaten-Zuführeinrichtung (11-13) nach dem Startdruckdatenset und vor dem Abschluss der Erzeugung des Druckdatensets zu dem Drucker übertragen werden kann.

2. System nach Anspruch 1, wobei
die Druckdaten-Erzeugungseinrichtung (53) dazu ausgelegt ist, erste Zeiteinstelldaten zu dem Druckdatenset hinzuzufügen, um den Drucker in den Schlafmodus zurückzuversetzen, nachdem das Drucken des Druckdatensets abgeschlossen wurde, und
die Startdruckdaten-Erzeugungseinrichtung (52) dazu ausgelegt ist, zweite Zeiteinstelldaten zu dem Startdruckdatenset hinzuzufügen, um den Drucker in den Schlafmodus zurückzuversetzen, falls auf das Startdruckdatenset keine Druckdaten folgen.

3. System nach Anspruch 2, ferner mit einer Einrichtung (58) zum Abschätzen einer Erzeugungsdauer des Druckdatensets,
wobei die Startdruckdaten-Erzeugungseinrichtung (52) dazu ausgelegt ist, die zweiten Zeiteinstelldaten auf einen längeren Wert als die geschätzte Erzeugungszeit einzustellen.

4. System nach Anspruch 1, wobei der Drucker (9) sowohl den Schlafmodus als auch einen Standby-Modus hat, und die erste Druckdaten-Zuführeinrichtung (10) ferner eine Einrichtung (58) zum Abschätzen einer Übertragungsdauer des Druckdatensets aufweist, wobei
die Startdruckdaten-Erzeugungseinrichtung (52) oder die Druckdaten-Erzeugungseinrichtung (53) dazu ausgelegt ist, einen Vorabstartbefehl zu dem Startdruckdatenset oder dem Druckdatenset hinzuzufügen, um den Drucker aus dem Standby-Modus zurückzuholen,
die Druckdaten-Erzeugungseinrichtung (53) dazu ausgelegt ist, den Vorabstartbefehl zu dem Druckdatenset hinzuzufügen, falls die Übertragungsdauer länger ist als die Rückkehrzeit aus dem Standby-Modus, und
die Startdruckdaten-Erzeugungseinrichtung (52) dazu ausgelegt ist, den Vorabstartbefehl zu dem Startdruckdatenset hinzuzufügen, falls die Übertragungsdauer kürzer als die Rückkehrzeit aus dem Standby-Modus ist.

5. Drucksteuerverfahren eines Drucksystems, das einen Drucker (9) mit einem Schlafmodus und erste und zweite Druckdaten-Zuführeinrichtungen (10-13) aufweist, die an den Drucker (9) angeschlossen sind, wobei in dem Verfahren:
ein Startdruckdatenset zur Freigabe des Druckers aus dem Schlafmodus basierend auf einem Startjob vor der Ausführung eines Druckjobs von der ersten Druckdaten-Zuführeinrichtung (10) erzeugt (29) wird,
das Startdruckdatenset gespoolt (30) wird,
ein Druckdatenset basierend auf dem Druckjob erzeugt (32) wird,
das Druckdatenset nach Abschluss seiner Erzeugung gespoolt (33) wird, auch wenn das Druckdatenset mehrere Seiten umfasst, und
das Startdruckdatenset und das Druckdatenset unabhängig voneinander zu dem Drucker (9) übertragen werden, so dass ein anderes Druckdatenset eines anderen Druckjobs von der zweiten Druckdaten-Zuführeinrichtung (11-13) nach dem Startdruckdatenset und vor Abschluss der Erzeugung des Druckdatensets zu dem Drucker übertragen werden kann.

6. Verfahren nach Anspruch 5, in dem ferner
erste Zeiteinstelldaten zu dem Druckdatenset hinzugefügt werden, um den Drucker zurück in den Schlafmodus zu versetzen, nachdem das Drucken des Druckdatensets abgeschlossen wurde, und
zweite Zeiteinstelldaten zu dem Startdruckdatenset hinzugefügt werden, um den Drucker zurück in den Schlafmodus zu versetzen, falls auf das Startdruckdatenset keine Druckdaten folgen.

7. Verfahren nach Anspruch 6, in dem ferner eine Erzeugungszeit des Druckdatensets abgeschätzt wird, bevor der Druckjob ausgeführt wird,
wobei der Startjob die zweiten Zeiteinstelldaten auf einen längeren Wert einstellt als die geschätzte Erzeugungszeit.

8. Verfahren nach Anspruch 5 unter Verwendung eines Druckers (9), der sowohl den Schlafmodus als auch einen Standby-Modus aufweist, wobei in dem Verfahren
eine Übertragungsdauer des Druckdatensets abgeschätzt wird, bevor der Druckjob ausgeführt wird,
ein Vorabstartbefehl zu dem Startdruckdatenset hinzugefügt wird, falls die Übertragungszeit kürzer ist als die Rückkehrzeit aus dem Standby-Modus des Druckers, und
ein Vorabstartbefehl zu dem Druckdatenset hinzugefügt wird, falls die Übertragungszeit länger ist als die Rückkehrzeit von dem Standby-Modus des Druckers.

9. System nach einem der Ansprüche 1 bis 4, wobei
die erste und die zweite Druckdaten-Zuführeinrichtung (10-13) dazu ausgelegt sind, das Startdruckdatenset und das Druckdatenset zur Ausgabe an den Drucker (9) zu übertragen, und
der Drucker dazu ausgelegt ist, sich selbst durch das Startdruckdatenset aus dem Schlafmodus freizugeben, das als erstes von der ersten oder der zweiten Druckdaten-Zuführeinrichtung empfangen wurde.

## Revendications

1. Système d'impression incluant une imprimante (9) ayant un mode de veille, et un premier équipement d'alimentation en données d'impression comportant :
des moyens (51) pour générer une tâche de démarrage afin de libérer ladite imprimante du mode de veille avant d'exécuter une tâche d'impression,
des moyens (52) pour générer un ensemble de données d'impression de démarrage afin de libérer ladite imprimante du mode de veille sur la base de ladite tâche de démarrage,
des moyens (53) pour générer un ensemble de données d'impression sur la base de ladite tâche d'impression, et
des moyens d'impression différée (54) pour mémoriser ledit ensemble de données d'impression de démarrage et ledit ensemble de données d'impression dans une série chronologique,
**caractérisé en ce que**
les moyens d'impression différée (54) sont adaptés pour mémoriser ledit ensemble de données d'impression une fois que sa génération est terminée, même si ledit ensemble de données d'impression inclut plusieurs pages,
ledit système d'impression inclut en outre un second équipement d'alimentation en données d'impression (11 à 13), et
ledit premier équipement d'alimentation en données d'impression est adapté pour transmettre ledit ensemble de données d'impression de démarrage et ledit ensemble de données d'impression indépendamment à ladite imprimante (9), de sorte qu'un autre ensemble de données d'impression d'une autre tâche d'impression en provenance dudit second équipement d'alimentation en données d'impression (11 à 13) peut être transmis à ladite imprimante après ledit ensemble de données d'impression de démarrage et avant la fin de la génération dudit ensemble de données d'impression.

2. Système selon la revendication 1, dans lequel
lesdits moyens de génération de données d'impression (53) sont adaptés pour ajouter des premières données de réglage de temps à l'ensemble de données d'impression pour replacer ladite imprimante dans ledit mode de veille une fois que l'impression de l'ensemble de données d'impression est terminée, et
lesdits moyens de génération de données d'impression de démarrage (52) sont adaptés pour ajouter des secondes données de réglage de temps à l'ensemble de données d'impression de démarrage pour replacer ladite imprimante dans ledit mode de veille, si ledit ensemble de données d'impression de démarrage n'est pas suivi par des données d'impression.

3. Système selon la revendication 2, comportant en outre des moyens (58) pour estimer un temps de génération dudit ensemble de données d'impression,
dans lequel lesdits moyens de génération de données d'impression de démarrage (52) sont adaptés pour établir lesdites secondes données de réglage de temps à une valeur supérieure audit temps de génération estimé.

4. Système selon la revendication 1, dans lequel ladite imprimante (9) dispose à la fois dudit mode de veille et d'un mode d'attente, le premier équipement d'alimentation en données d'impression (10) comportant en outre des moyens (58) pour estimer un temps de transmission dudit ensemble de données d'impression, dans lequel
lesdits moyens de génération de données d'impression de démarrage (52) ou lesdits moyens de génération de données d'impression (53) sont adaptés pour ajouter une instruction de pré-démarrage audit ensemble de données d'impression de démarrage ou audit ensemble de données d'impression pour que ladite imprimante revienne dudit mode d'attente,
lesdits moyens de génération de données d'impression (53) sont adaptés pour ajouter ladite instruction de pré-démarrage audit ensemble de données d'impression, si ledit temps de transmission est supérieur à un temps de retour dudit mode d'attente, et
lesdits moyens de génération de données d'impression de démarrage (52) sont adaptés pour ajouter ladite instruction de pré-démarrage audit ensemble de données d'impression de démarrage, si ledit temps de transmission est plus court que le temps de retour dudit mode d'attente.

5. Procédé de commande d'impression d'un système d'impression incluant une imprimante (9) ayant un mode de veille, et des premier et second équipements d'alimentation en données d'impression (10 à 13) étant reliés à ladite imprimante (9), le procédé comportant les étapes consistant à :
générer (29) un ensemble de données d'impression de démarrage pour libérer ladite imprimante du mode de veille sur la base d'une tâche de démarrage avant l'exécution d'une tâche d'impression depuis ledit premier équipement d'alimentation en données d'impression (10),
différer l'impression (30) dudit ensemble de données d'impression de démarrage,
générer (32) un ensemble de données d'impression sur la base de ladite tâche d'impression,
différer l'impression (33) dudit ensemble de données d'impression après la fin de sa génération, même si ledit ensemble de données d'impression inclut plusieurs pages, et
transmettre ledit ensemble de données d'impression de démarrage et ledit ensemble de données d'impression indépendamment à ladite imprimante (9), de sorte qu'un autre ensemble de données d'impression d'une autre tâche d'impression dudit second équipement d'alimentation en données d'impression (11 à 13) peut être transmis à ladite imprimante après ledit ensemble de données d'impression de démarrage et avant la fin de la génération dudit ensemble de données d'impression.

6. Procédé selon la revendication 5, comportant en outre les étapes consistant à :
ajouter des premières données de réglage de temps à l'ensemble de données d'impression pour replacer ladite imprimante dans ledit mode de veille une fois que l'impression de l'ensemble de données d'impression est terminée, et
ajouter des secondes données de réglage de temps à l'ensemble de données d'impression de démarrage pour replacer ladite imprimante en mode de veille, si ledit ensemble de données d'impression de démarrage n'est pas suivi par des données d'impression.

7. Procédé selon la revendication 6, comportant en outre l'étape consistant à estimer un temps de génération dudit ensemble de données d'impression avant l'exécution de ladite tache d'impression,
dans lequel ladite tache de démarrage établit les secondes données de réglage de temps à une valeur supérieure au temps de génération estimé.

8. Procédé selon la revendication 5, utilisant une imprimante (9) ayant à la fois le mode de veille et un mode d'attente, comportant en outre les étapes consistant à :
estimer un temps de transmission dudit ensemble de données d'impression avant l'exécution de ladite tache d'impression,
ajouter une instruction de pré-démarrage audit ensemble de données d'impression de démarrage, si ledit temps de transmission est plus court que le temps de retour du mode d'attente de ladite imprimante, et
ajouter une instruction de pré-démarrage audit ensemble de données d'impression, si ledit temps de transmission est supérieur au temps de retour du mode d'attente de ladite imprimante.

9. Système selon l'une quelconque des revendications 1 à 4, dans lequel
lesdits premier et second équipements d'alimentation en données d'impression (10 à 13) sont adaptés pour transmettre l'ensemble de données d'impression de démarrage et l'ensemble de données d'impression pour les délivrer en sortie à ladite imprimante (9), et
ladite imprimante est adaptée pour quitter automatiquement le mode de veille par l'intermédiaire dudit ensemble de données d'impression de démarrage reçu en premier en provenance de l'un quelconque des premier et second équipements d'alimentation en données d'impression.
